# EUROPÄISCHE PATENTSCHRIFT

(11) **EP 3 048 015 B1**
(45) Veröffentlichungstag und Bekanntmachung des Hinweises auf die Patenterteilung: **19.06.2019**
(21) Anmeldenummer: 16152168.7
(22) Anmeldetag: 21.01.2016
(51) Int. Cl.: B60R 13/02

(54) **FORMTEIL, INSBESONDERE ALS FORMTEIL AUSGEBILDETES DEKORTEIL UND/ODER VERKLEIDUNGSTEIL FÜR EINEN FAHRZEUGINNENRAUM, UND VERFAHREN ZUM HERSTELLEN EINES FORMTEILS**
MOULDED PART, IN PARTICULAR DECORATIVE PART AND/OR TRIM FOR A VEHICLE INTERIOR DESIGNED AS A MOULDED PART, AND METHOD FOR PRODUCING A MOULDED PART
PIECE DE FORMAGE, EN PARTICULIER PIECE DECORATIVE ET/OU PIECE D'HABILLAGE CONÇUE COMME UNE PIECE DE FORMAGE POUR L'ESPACE INTERIEUR D'UN VEHICULE ET PROCEDE DE FABRICATION DE PIECE DE FORMAGE

(30) Priorität: 23.01.2015 DE 102015101013
(43) Veröffentlichungstag der Anmeldung: 27.07.2016
(73) Patentinhaber: Novem Car Interior Design GmbH, 95519 Vorbach (DE)
(72) Erfinder: HAAS, Mario, 95491 Ahorntal (DE); KIRCHBERGER, Daniel, 95506 Kastl (DE)
(74) Vertreter: Schlögl, Markus

(56) Entgegenhaltungen:
- EP-A1- 2 295 293
- WO-A1-03/033306
- WO-A1-2004/024510
- WO-A1-2005/035299
- DE-A1- 19 717 740
- DE-A1-102009 024 989
- DE-A1-102011 016 417
- DE-A1-102012 110 153
- DE-U1-202010 005 688
- US-A1- 2012 280 528

## Beschreibung

Die Erfindung betrifft ein Formteil, insbesondere ein als Formteil ausgebildetes Dekorteil und/oder Verkleidungsteil für einen Fahrzeuginnenraum, und ein Verfahren zum Herstellen eines solchen Formteils.

Derartige Formteile umfassen eine von einer Kunststofffolie gebildete Dekorschicht, an deren Rückseite ein Träger angeordnet, insbesondere angespritzt, ist. Die Kunststofffolie weist zumindest einseitig eine lichtundurchlässige Drucklage mit mindestens einer Aussparung zur Lichtdurchführung auf. Der Träger weist mindestens ein Fenster im Bereich der Aussparung in der Drucklage auf, wobei in dem Fenster mindestens ein Funktionselement umfassend mindestens ein Lichtelement und/oder mindestens einen Lichtleiter und mindestens ein Sensorikelement angeordnet ist.

Solche Formteile für den Fahrzeuginnenraum sind an sich bekannt. Zum Stand der Technik wird verwiesen auf EP 2 295 293 A1, DE 10 2012 110 153 A1, DE 20 2010 005 688 U1, DE 10 2011 016 417 A1, WO 2004 / 024 510 A1, DE 10 2009 024 510 A1, US 2012 / 280 528 A1.

Ferner wird zum Stand der Technik verwiesen auf die Druckschriften DE 197 17 740 A1, WO 2005/035299 A1, WO 03/033306 A1, US 2002 / 01 01 738 A1, DE 10 2008 064 233 A1.

Jedoch steigen stets die Anforderungen, die an derartige Formteile gestellt werden. Insbesondere werden Lichteffekte zur Verdeutlichung von Symbolen oder Aussparungen gewünscht, um diese auch bei schlechten oder schwachen Lichtverhältnissen erkennbar zu machen oder optisch aufzuwerten. Die präzise Hinterleuchtung von Symbolen oder Aussparungen und/oder kapazitiver Sensorik insbesondere bei großen bzw. großflächigen Formteilen stellte bis dato jedoch ein großes Problem dar.

Es ist daher Aufgabe der Erfindung, ein neues Formteil, insbesondere ein Formteil mit einer präzisen Hinterleuchtung von Symbolen oder Aussparungen, und ein neues Verfahren, insbesondere zur Herstellung derartiger Formteile, anzugeben.

Diese Aufgabe wird hinsichtlich des Formteils gelöst durch die Merkmale des Anspruchs 1 und hinsichtlich des Verfahrens durch die Merkmale des Anspruchs 8. Vorteilhafte Ausgestaltungen und Weiterbildungen sind in den jeweils abhängigen Ansprüchen angegeben.

Das erfindungsgemäße Formteil ist dadurch gekennzeichnet, dass das Sensorikelement mindestens einen kapazitiven Sensor umfasst oder mindestens ein kapazitiver Sensor ist, wobei der kapazitative Sensor derart ausgebildet ist, dass er auf eine Annäherung und/oder Bewegung, insbesondere des Fingers, eines Bedieners reagiert.

Die Vorteile der Erfindung liegen insbesondere darin, dass durch den Aufbau des Formteils eine präzise Hinterleuchtung von Aussparungen oder von durch diese Aussparungen gebildeten Symbolen möglich ist.

Die eine oder die mehreren lichtdurchlässigen Ausnehmungen sind hinsichtlich ihrer Form und Anordnung beispielsweise für eine gewünschte Symbolik oder Optik vorgesehen.

Vorzugsweise ist das Fenster eine Öffnung, die durch den gesamten Träger hindurchgeht. Somit kann das Funktionselement direkt oder zumindest sehr nahe an der Kunststofffolie und damit an der Aussparung in der Drucklage angeordnet werden. Beispielsweise können somit Lichtelement oder Lichtleiter im Fenster derart nahe an der oder den zugeordneten Aussparungen angeordnet sein, dass Streulicht zumindest weitgehend vermieden wird. Auf diese Weise wird eine gezielte Beleuchtung einer oder mehrerer zugeordneter Aussparungen ermöglicht. Weitere Aussparungen, deren Beleuchtung nicht erwünscht ist, werden dann nicht oder zumindest kaum in unerwünschter Weise durch Streulicht beleuchtet und bleiben somit dunkel. Dies ermöglicht eine gezielte Darstellung bestimmter Symbole für einen Betrachter, wobei gleichzeitig andere Symbole für den Betrachter dunkel bleiben und auch nicht durch Streulicht schwach sichtbar werden.

Vorzugsweise ist der Träger zumindest teilweise lichtundurchlässig ausgebildet, insbesondere zumindest im Bereich um das oder die Fenster. Dies unterstützt die vorstehend bereits im Zusammenhang mit dem Vorsehen von mindestens einem Fenster im Träger angesprochene Vermeidung oder Reduzierung von Streulicht.

Der Träger kann aus Polycarbonat (Kurzzeichen: PC) oder Acrylnitril-Butadien-Styrol (Kurzzeichen: ABS) oder aus einem Blend aus Polycarbonat (Kurzzeichen: PC) und Acrylnitril-Butadien-Styrol (Kurzzeichen: ABS) gebildet sein.

Der Träger kann Anbauteile, insbesondere beim Spritzgießen ausgebildete oder eingespritzte Anbauteile, aufweisen. Diese Anbauteile können beispielsweise Befestigungselemente zur Anbringung des Formteils sein, beispielsweise zur Anbringung des Formteils im Innenraum eines Kraftfahrzeugs.

Gemäß einer bevorzugten Weiterbildung der Erfindung ist vorgesehen, dass der Träger als Diffusor ausgebildet ist. Alternativ oder additiv kann vorgesehen sein, dass zwischen dem Träger und der Kunststofffolie ein Diffusor vorgesehen ist.

Der Diffusor kann aus lichtdurchlässigem und/oder eingefärbtem Kunststoff, ausgebildet sein. Alternativ oder additiv kann an oder in oder nahe dem Diffusor ein Funktionselement umfassend mindestens ein Lichtelement und/oder mindestens einen Lichtleiter und/oder mindestens ein Sensorikelement angeordnet sein.

Die Kunststofffolie ist vorzugsweise transparent oder transluzent ausgebildet.

Eine Weiterbildung der Erfindung sieht vor, dass die Kunststofffolie an ihrer Rückseite die lichtundurchlässige Drucklage mit mindestens einer Aussparung aufweist.

Vorzugsweise ist die Kunststofffolie aus einem thermoplastischen Kunststoff, insbesondere Polycarbonat (Kurzzeichen: PC) gebildet.

Besonders bevorzugt ist die Kunststofffolie an einer ihrer Rückseite abgewandten Vorderseite mit einer transparenten oder transluzenten Schutz- und/oder Optikschicht, beispielsweise einer Schutz- und/oder Optikschicht aus Polycarbonat (Kurzzeichen: PC) oder Polymethylmethacrylat (Kurzzeichen: PMMA) oder Polyurethan (Kurzzeichen: PUR) oder Polyurea (Kurzzeichen: PUA), überzogen. Die Schutz- und/oder Optikschicht kann vorzugsweise mittels Sprühlackieren oder Spritzgießen oder RIM-Technik (Reaction Injection Moulding Technik) aufgebracht sein. Ein Vorteil der Schutz- und/oder Optikschicht neben ihren üblichen Schutzeffekten ist der Symbolik-unter-Glas-Effekt, der die Symbole oder hinterleuchteten Aussparungen besonders hochwertig wirken lässt.

Mit einer transparenten Schutz- und/oder Optikschicht kann das Lichtdesign auch im nicht hinterleuchteten Zustand wahrgenommen werden. Eine transluzente Schutz- und/oder Optikschicht ermöglicht Verschwindeeffekte, so dass ein Betrachter im Tagdesign beispielsweise eine homogene Oberfläche wahrnimmt und im hinterleuchteten Zustand das Lichtdesign hervortritt.

Vorzugsweise ist die Schutz- und/oder Optikschicht mit einer Hard Coat Lackierung, insbesondere auf Basis von Dual Cure oder Monocure Systemen, überzogen. Dies hat zum Vorteil, dass die Schutz- und/oder Optikschicht hinsichtlich ihrer Beständigkeit weiter veredelt wird.

Die Schutz- und/oder Optikschicht kann an ihrer der Kunststofffolie abgewandten Oberfläche plan oder glatt oder ohne haptische Elemente ausgebildet sein. Es ist aber auch möglich, dass die Schutz- und/oder Optikschicht an ihrer der Kunststofffolie abgewandten Oberfläche eine oder mehrere Vertiefungen und/oder Erhebungen, vorzugsweise ausgebildet als haptische Elemente für einen Bediener, insbesondere zur Führung des Fingers eines Bedieners, aufweist. Vorzugsweise ist diese oder sind diese Vertiefungen und/oder Erhebungen im Bereich der Aussparung oder der Aussparungen in der Drucklage und/oder im Bereich des Fensters oder der Fenster im Träger in der Schutz- und/oder Optikschicht vorgesehen. Es erweist sich als vorteilhaft, wenn die Abmessungen der jeweiligen Vertiefung und/oder Ergebung den Abmessungen des zugeordneten Fensters entsprechen. Unter "entsprechenden" Abmessungen werden insbesondere Abmessungen verstanden, die maximal 10%, vorzugsweise maximal 5% voneinander abweichen. Eine derartige Vertiefung oder Erhöhung hat den zusätzlichen Vorteil, dass sich dadurch Einfallstellen, die bei der Herstellung der Schutz- und/oder Optikschicht im Bereich des zugeordneten Fensters im Träger entstehen können, kaschieren lassen.

Bei dem erfindungsgemäßen Verfahren zum Herstellen des erfindungsgemäßen Formteils wird eine zumindest einseitig lichtundurchlässig mit einer Drucklage bedruckte Folie an ihrer Rückseite mittels Spritzgießen mit einem Träger hinterspritzt.

Erfindungsgemäß wird beim Anspritzen des Trägers mindestens ein Fenster ausgespart. Anschließend wird im Bereich des Fensters die mindestens eine Aussparung zur Lichtdurchführung in die Drucklage eingebracht, wobei in das Fenster mindestens ein Funktionselement mit mindestens einem Lichtelement oder mindestens einem Lichtleiter und/oder mindestens ein Sensorikelement eingebracht wird.

Es kann vorgesehen sein, dass als Träger oder zwischen Träger und Kunststofffolie ein Diffusor, insbesondere ein Diffusor aus lichtdurchlässigem und/oder eingefärbtem Kunststoff, vorgesehen, insbesondere angespritzt, wird, wobei vor dem Hinterspritzen der Kunststofffolie die mindestens eine Aussparung zur Lichtdurchführung in die Drucklage eingebracht wird.

Ferner kann vorgesehen sein, dass die Kunststofffolie vor dem Hinterspritzen an einer als Rückseite im Formteil vorgesehenen Seite, insbesondere mittels eines Siebdruckverfahrens, bedruckt wird oder bedruckt ist.

Eine Weiterbildung der Erfindung sieht vor, dass die mindestens eine Aussparung zur Lichtdurchführung mittels Laserabtrag in die Drucklage eingebracht wird, wobei insbesondere vorgesehen ist, vor dem Einbringen der mindestens einen Ausnehmung die Kunststofffolie in eine vorgesehene Form zu bringen.

Eine Weiterbildung des erfindungsgemäßen Verfahrens sieht vor, dass Symbole mit lichtundurchlässiger Farbe im Bereich der mindestens einen Aussparung zur Lichtdurchführung auf die Kunststofffolie, beispielsweise im Tampondruckverfahren oder Digitaldruckverfahren, aufgedruckt werden. Beispielsweise können die Symbole durch die Farbe, vorzugsweise im Tampondruckverfahren oder Digitaldruckverfahren, farblich gestaltet werden.

Bevorzugt wird eine transparente oder transluzente Schutz- und/oder Optikschicht auf einer als Vorderseite im Formteil vorgesehenen Seite der Kunststofffolie aufgebracht, insbesondere mittels Sprühlackieren oder Spritzgießen oder RIM-Technik, vorzugsweise eine Schutz- und/oder Optikschicht aus Polycarbonat (Kurzzeichen: PC) oder Polymethylmethacrylat (Kurzzeichen: PMMA) oder Polyurethan (Kurzzeichen: PUR) oder Polyurea (Kurzzeichen: PUA). Bevorzugt wird die Schutz- und/oder Optikschicht aufgebracht bevor die lichtdurchlässigen Ausnehmungen mittels Laserabtrag in die Drucklage eingebracht wurden.

Gemäß einer Ausführungsvariante der Erfindung werden beim Hinterspritzen Anbauteile an der Rückseite des Trägers ausgebildet oder eingespritzt.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Dabei zeigen
- FIG 1: in einer schematischen Querschnittsdarstellung ein Ausführungsbeispiel eines erfindungsgemäßen Formteils, und
- FIG 2: in einer schematischen Querschnittsdarstellung einen Ausschnitt eines Ausführungsbeispiels eines erfindungsgemäßen Formteils, sowie
- FIG 3: in einer schematischen Querschnittsdarstellung einen Ausschnitt eines weiteren Ausführungsbeispiels eines erfindungsgemäßen Formteils.

Einander entsprechende Teile und Komponenten sind jeweils mit den gleichen Bezugszeichen bezeichnet.

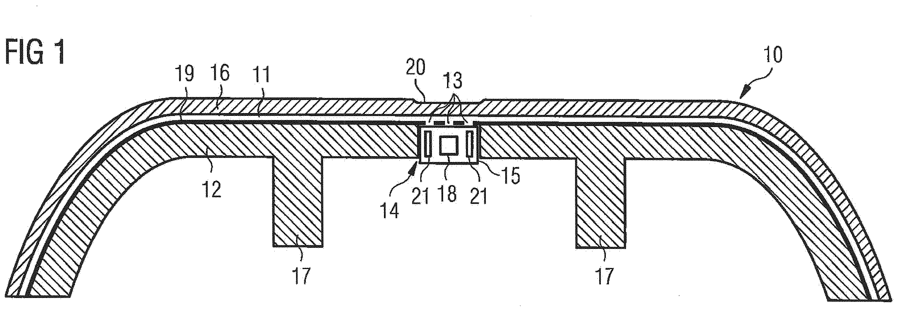

FIG 1 bis FIG 3 zeigen jeweils ein Formteil 10 für einen Fahrzeuginnenraum, umfassend eine von einer Kunststofffolie 11 aus Polycarbonat (Kurzzeichen: PC) gebildete Dekorschicht, an deren Rückseite ein Träger 12 angespritzt ist. Die Kunststofffolie 11 weist an ihrer Rückseite eine lichtundurchlässig Drucklage 19 mit mehreren Aussparungen 13 zur Lichtdurchführung auf. Der Träger 12 weist ein Fenster 14 im Bereich der Aussparungen 13 in der Drucklage 19 auf. In dem Fenster 14 ist ein Funktionselement 15 umfassend ein Lichtelement 18 und zwei kapazitive Sensoren 21 angeordnet.

Das Funktionselement 15 umfasst ferner kapazitive Sensoren 21, die derart ausgebildet sind, dass sie auf eine Annäherung bzw. Bewegung des Fingers eines Bedieners reagieren.

Die Kunststofffolie 11 ist an einer ihrer Rückseite abgewandten Vorderseite mit einer transparenten oder transluzenten Schutz- und/oder Optikschicht 16 aus Polycarbonat (Kurzzeichen: PC) oder Polymethylmethacrylat (Kurzzeichen: PMMA) oder Polyurethan (Kurzzeichen: PUR) oder Polyurea (Kurzzeichen: PUA) überzogen. Die Schutz- und/oder Optikschicht 16 weist an ihrer der Kunststofffolie 11 abgewandten Oberfläche eine Vertiefung 20 als haptisches Element zur Führung des Fingers eines Bedieners auf. Diese Vertiefung 20 ist im Bereich der Aussparungen 13 in der Drucklage vorgesehen, wobei im dargestellten Beispiel die Vertiefung 20 alle vorgesehenen Aussparungen 13 überspannt. Da das Fenster 14 im Träger 12 im Bereich der Aussparungen 13 in der Drucklage 19 vorgesehen ist, ist auch die Vertiefung 20 im Bereich des Fensters 14 vorgesehen, wobei die Vertiefung 20 im dargestellten Beispiel das Fenster 14 geringfügig überspannt, das heißt im Wesentlichen die gleichen Abmessungen wie das Fenster 14 aufweist. Alternativ zur dargestellten Vertiefung 20 könnte auch einer Erhebung vorgesehen sein. Diese Vertiefung 20 bzw. eine alternative Erhöhung hat den zusätzlichen Vorteil, dass sich dadurch Einfallstellen, die bei der Herstellung der Schutz- und/oder Optikschicht 16 im Bereich des oder der Fenster 14 im Träger 12 entstehen können, kaschieren lassen. Daher ist es vorteilhaft, wenn die Abmessungen der Vertiefung 20 bzw. einer entsprechenden Erhebung zumindest im Wesentlichen den Abmessungen des zugeordneten Fensters 14 entsprechen.

Der Träger 12 ist lichtundurchlässig ausgebildet, wodurch seitliches Streulicht verhindert wird, und aus Polycarbonat (Kurzzeichen: PC) oder Acrylnitril-Butadien-Styrol (Kurzzeichen: ABS) oder aus einem Blend aus Polycarbonat (Kurzzeichen: PC) und Acrylnitril-Butadien-Styrol (Kurzzeichen: ABS) gebildet. In FIG 1 ist gezeigt, dass der Träger 12 Befestigungselemente als Anbauteile 17 aufweisen kann.

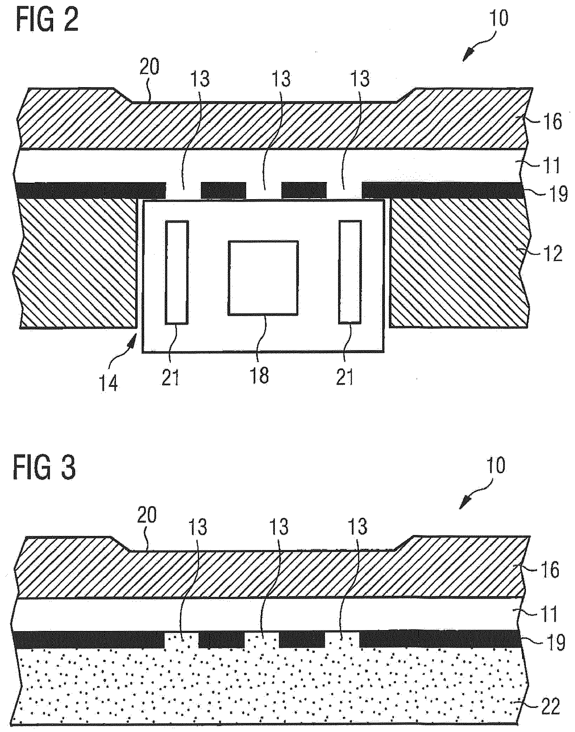

FIG 3 zeigt einen Ausschnitt einer weiteren Ausführungsvariante der Erfindung. Das Formteil 10 gemäß FIG 3 umfasst eine von einer Kunststofffolie 11 aus Polycarbonat gebildete Dekorschicht, an deren Rückseite ein Träger 12 angeordnet ist. Die Kunststofffolie 11 weist einseitig an ihrer Rückseite eine lichtundurchlässige Drucklage 19 mit mehreren Aussparungen 13 zur Lichtdurchführung auf. Der Träger 12 ist als Diffusor 22 ausgebildet, der aus eingefärbtem Kunststoff gebildet ist.

Die Kunststofffolie 11 ist an einer ihrer der Rückseite abgewandten Vorderseite mit einer transparenten Schutz- und/oder Optikschicht 16 überzogen, wobei diese im dargestellten Beispiel an ihrer der Kunststofffolie 11 abgewandten Oberfläche eine Vertiefung 20 als haptische Elemente für einen Bediener, insbesondere zur Führung des Fingers eines Bedieners, aufweist. Alternativ zur Vertiefung 20 könnte auch hier eine Erhebung vorgesehen sein. Es ist aber auch möglich, weder eine Vertiefung noch eine Erhebung vorzusehen, das heißt die Oberfläche der Schutz- und/oder Optikschicht 16 könnte beispielsweise auch völlig plan oder glatt ausgebildet sein, insbesondere ohne haptische Elemente für einen Bediener.

### Bezugszeichen liste

- 10: Formteil
- 11: Kunststofffolie
- 12: Träger
- 13: Aussparung
- 14: Fenster
- 15: Funktionselement
- 16: Schutz- und/oder Optikschicht
- 17: Anbauteil
- 18: Lichtelement
- 19: Drucklage
- 20: Vertiefung
- 21: Kapazitiver Sensor
- 22: Diffusor

## Patentansprüche

1. Formteil (10),
umfassend eine von einer Kunststofffolie (11) gebildete Dekorschicht, an deren Rückseite ein Träger (12) angeordnet ist,
wobei die Kunststofffolie (11) zumindest einseitig eine lichtundurchlässige Drucklage (19) mit mindestens einer Aussparung (13) zur Lichtdurchführung aufweist,
wobei der Träger (12) mindestens ein Fenster (14) im Bereich der Aussparung (13) in der Drucklage aufweist,
wobei in dem Fenster (14) mindestens ein Funktionselement (15) umfassend mindestens ein Lichtelement (18) und/oder mindestens einen Lichtleiter und mindestens ein Sensorikelement angeordnet ist,
**dadurch gekennzeichnet, dass**
das Sensorikelement mindestens einen kapazitiven Sensor (21) umfasst oder mindestens ein kapazitiver Sensor (21) ist, wobei der kapazitative Sensor (21) derart ausgebildet ist, dass er auf eine Annäherung und/oder Bewegung eines Bedieners reagiert.

2. Formteil nach Anspruch 1,
**dadurch gekennzeichnet, dass**
der Träger (12) lichtundurchlässig ausgebildet ist, und/oder aus Polycarbonat (Kurzzeichen: PC) oder Acrylnitril-Butadien-Styrol (Kurzzeichen: ABS) oder aus einem Blend aus Polycarbonat (Kurzzeichen: PC) und Acrylnitril-Butadien-Styrol (Kurzzeichen: ABS) gebildet ist, und/oder Anbauteile (17) aufweist.

3. Formteil nach einem der vorhergehenden Ansprüche,
**dadurch gekennzeichnet,**
**dass** der Träger (12) als Diffusor (22) ausgebildet ist, und/oder dass zwischen dem Träger (12) und der Kunststofffolie (11) ein Diffusor (22) vorgesehen ist.

4. Formteil nach Anspruch 3,
**dadurch gekennzeichnet,**
**dass** der Diffusor (22) aus lichtdurchlässigem und/oder eingefärbtem Kunststoff, ausgebildet ist, und/oder
**dass** an oder in oder nahe dem Diffusor (22) ein Funktionselement (15) umfassend mindestens ein Lichtelement (18) und/oder mindestens einen Lichtleiter und/oder mindestens ein Sensorikelement angeordnet ist.

5. Formteil nach einem der vorhergehenden Ansprüche,
**dadurch gekennzeichnet,**
**dass** die Kunststofffolie (11) transparent oder transluzent ausgebildet ist, wobei die Kunststofffolie (11) an ihrer Rückseite die lichtundurchlässige Drucklage (19) mit mindestens einer Aussparung (13) aufweist, und/oder
**dass** die Kunststofffolie (11) aus einem thermoplastischen Kunststoff gebildet ist.

6. Formteil nach einem der vorhergehenden Ansprüche,
**dadurch gekennzeichnet, dass**
die Kunststofffolie (11) an einer ihrer der Rückseite abgewandten Vorderseite mit einer transparenten oder transluzenten Schutz- und/oder Optikschicht (16) überzogen ist.

7. Formteil nach Anspruch 6,
**dadurch gekennzeichnet, dass**
die Schutz- und/oder Optikschicht (16) an ihrer der Kunststofffolie (11) abgewandten Oberfläche eine oder mehrere Vertiefungen (20) und/oder Erhebungen als haptische Elemente für einen Bediener aufweist.

8. Verfahren zum Herstellen eines Formteils (10) nach einem der vorhergehenden Ansprüche,
bei dem eine zumindest einseitig lichtundurchlässig mit einer Drucklage (19) bedruckte Kunststofffolie (11) an ihrer Rückseite mittels Spritzgießen mit einem Träger (12) hinterspritzt wird,
**dadurch gekennzeichnet, dass**
beim Anspritzen des Trägers mindestens ein Fenster (14) ausgespart wird,
wobei anschließend im Bereich des Fensters (14) die mindestens eine Aussparung (13) zur Lichtdurchführung in die Drucklage (19) eingebracht wird,
wobei in das Fenster (14) mindestens ein Funktionselement (15) mit mindestens einem Lichtelement (18) oder mindestens einem Lichtleiter und/oder mindestens ein Sensorikelement eingebracht wird.

9. Verfahren nach Anspruch 8,
**dadurch gekennzeichnet, dass**
als Träger (12) oder zwischen Träger (12) und Kunststofffolie (11) ein Diffusor (22) vorgesehen wird,
wobei vor dem Hinterspritzen der Kunststofffolie (11) die mindestens eine Aussparung (13) zur Lichtdurchführung in die Drucklage (19) eingebracht wird.

10. Verfahren nach einem der Ansprüche 8 oder 9,
**dadurch gekennzeichnet,**
**dass** die Kunststofffolie (11) vor dem Hinterspritzen an einer als Rückseite im Formteil vorgesehenen Seite bedruckt wird oder bedruckt ist, und/oder
**dass** die mindestens eine Aussparung (13) zur Lichtdurchführung mittels Laserabtrag in die Drucklage (19) eingebracht wird.

11. Verfahren nach einem der Ansprüche 8 bis 10,
**dadurch gekennzeichnet, dass**
Symbole mit lichtundurchlässiger Farbe im Bereich der mindestens einen Aussparung (13) zur Lichtdurchführung auf die Kunststofffolie (11) aufgedruckt werden.

12. Verfahren nach einem der Ansprüche 8 bis 11,
**dadurch gekennzeichnet, dass**
eine transparente oder transluzente Schutz- und/oder Optikschicht (16) auf einer als Vorderseite im Formteil (10) vorgesehenen Seite der Kunststofffolie (11) aufgebracht wird.

## Claims

1. A molded part (10),
comprising a decorative layer, formed by a plastic film (11), at the rear side of which a backing (12) is situated,
wherein the plastic film (11) on at least side has an opaque printed layer (19) with at least one recess (13) for transmitting light,
wherein the backing (12) has at least one window (14) in the area of the recess (13) in the printed layer,
wherein at least one functional element (15) including at least one light element (18) and/or at least one optical fiber and at least one sensor element is situated in the window (14),
**characterized in that**
the sensor element includes at least one capacitive sensor (21) or is at least one capacitive sensor (21), wherein the capacitive sensor (21) is designed in such a way that it responds to an approach and/or movement by an operator.

2. The molded part according to Claim 1,
**characterized in that**
the backing (12) has an opaque design, and/or is made of polycarbonate (PC) or acrylonitrile-butadiene-styrene (ABS) or a blend of polycarbonate (PC) and acrylonitrile-butadiene-styrene (ABS), and/or has mounting parts (17).

3. The molded part according to one of the preceding claims,
**characterized in that**
the backing (12) is designed as a diffuser (22), and/or a diffuser (22) is provided between the backing (12) and the plastic film (11).

4. The molded part according to Claim 3,
**characterized in that**
the diffuser (22) is made of light-permeable and/or colored plastic, and/or a functional element (15) including at least one light element (18) and/or at least one optical fiber and/or at least one sensor element is situated on or in or near the diffuser (22).

5. The molded part according to one of the preceding claims,
**characterized in that**
the plastic film (11) has a transparent or translucent design, wherein the plastic film (11) on its rear side has the opaque printed layer (19) with at least one recess (13), and/or
the plastic film (11) is made of a thermoplastic plastic.

6. The molded part according to one of the preceding claims,
**characterized in that**
the plastic film (11) on its front side facing away from the rear side is coated with a transparent or translucent protective and/or optical layer (16).

7. The molded part according to Claim 6,
**characterized in that**
the protective and/or optical layer (16) on its surface facing away from the plastic film (11) has one or more depressions (20) and/or elevations as haptic elements for an operator.

8. A method for manufacturing a molded part (10) according to one of the preceding claims,
wherein a plastic film (11) that is opaquely imprinted at least on one side with a printed layer (19) is back-injected on its rear side with a backing (12) by means of injection molding,
**characterized in that**
at least one window (14) is left open when the backing is molded on, wherein the at least one recess (13) for transmitting light into the printed layer (19) is subsequently introduced in the area of the window (14), wherein at least one functional element (15) having at least one light element (18) or at least one optical fiber and/or at least one sensor element is introduced into the window (14).

9. The method according to Claim 8,
**characterized in that**
a diffuser (22) is provided as a backing (12) or is provided between the backing (12) and the plastic film (11),
wherein prior to the back-injection of the plastic film (11), the at least one recess (13) for transmitting light is introduced into the printed layer (19). 1.

10. The method according to one of Claims 8 or 9,
**characterized in that**
prior to the back-injection, the plastic film (11) becomes or is imprinted on a side provided as the rear side in the molded part, and/or
the at least one recess (13) for transmitting light is introduced into the printed layer (19) by means of laser ablation.

11. The method according to one of Claims 8 to 10,
**characterized in that**
symbols with an opaque color are imprinted in the area of the at least one recess (13) for transmitting light to the plastic film (11).

12. The method according to one of Claims 8 to 11,
**characterized in that**
a transparent or translucent protective and/or optical layer (16) is applied to a side of the plastic film (11) provided as the front side in the molded part (10).

## Revendications

1. Pièce moulée (10),
comprenant une couche décorative, formée à partir d'un film plastique (11), sur la face arrière de laquelle est disposé un support (12),
dans laquelle le film plastique (11) présente au moins d'un côté une couche d'impression (19) opaque avec au moins une encoche (13) pour le passage de la lumière,
dans laquelle le support (12) présente au moins une fenêtre (14) au niveau de l'encoche (13) dans la couche d'impression,
dans laquelle au moins un élément fonctionnel (15) est disposé dans la fenêtre (14) et comprend au moins un élément lumineux (18) et/ou au moins un guide de lumière et au moins un élément de capteur, **caractérisée en ce que** l'élément de capteur comprend au moins un capteur capacitif (21) ou est au moins un capteur capacitif (21), ledit capteur capacitif (21) étant réalisé de manière à réagir en cas d'approche et/ou de mouvement d'un utilisateur.

2. Pièce moulée selon la revendication 1, **caractérisée en ce que** le support (12) est réalisé de manière opaque et/ou est formé en polycarbonate (symbole : PC) ou en acrylonitrile-butadiène-styrène (symbole : ABS) ou d'un mélange de polycarbonate (symbole : PC) et d'acrylonitrile-butadiène-styrène (symbole : ABS) et/ou présente des pièces rapportées (17).

3. Pièce moulée selon l'une quelconque des revendications précédentes, **caractérisée en ce que** le support (12) est réalisé sous forme de diffuseur (22) et/ou **en ce qu'**un diffuseur (22) est prévu entre le support (12) et le film plastique (11).

4. Pièce moulée selon la revendication 3, **caractérisée en ce que** le diffuseur (22) est réalisé en matière plastique transparente et/ou colorée, et/ou **en ce qu'**un élément fonctionnel (15) comprenant au moins un élément lumineux (18) et/ou au moins un guide de lumière et/ou au moins un élément de capteur est disposé sur ou dans ou à proximité du diffuseur (22).

5. Pièce moulée selon l'une quelconque des revendications précédentes, **caractérisée en ce que** le film plastique (11) est réalisé de manière transparente ou translucide, le film plastique (11) présentant sur sa face arrière la couche d'impression opaque (19) avec au moins une encoche (13), et/ou **en ce que** le film plastique (11) est réalisé en matière thermoplastique.

6. Pièce moulée selon l'une quelconque des revendications précédentes, **caractérisée en ce que** le film plastique (11) est recouvert d'une couche de protection et/ou d'aspect (16) transparente ou translucide sur une face avant détournée de la face arrière.

7. Pièce moulée selon la revendication 6, **caractérisée en ce que** la couche de protection et/ou d'aspect (16) présente sur sa surface détournée du film plastique (11) un ou plusieurs creux (20) et/ou reliefs sous forme d'éléments haptiques pour un utilisateur.

8. Procédé de fabrication d'une pièce moulée (10) selon l'une quelconque des revendications précédentes,
dans lequel un film plastique (11) opaque au moins d'un côté et imprimé avec une couche d'impression (19) est contre-injecté avec un support (12) sur sa face arrière par moulage par injection,
**caractérisé en ce que** lors de l'injection du support, au moins une fenêtre (14) est dégagée,
dans lequel ensuite, au niveau de la fenêtre (14), ladite au moins une encoche (13) est introduite dans la couche d'impression (19) pour le passage de la lumière,
dans lequel au moins un élément fonctionnel (15) avec au moins un élément lumineux (18) ou au moins un guide de lumière et/ou au moins un élément de capteur est introduit dans la fenêtre (14).

9. Procédé selon la revendication 8, **caractérisé en ce qu'**un diffuseur (22) est prévu comme support (12) ou entre le support (12) et le film plastique (11), dans lequel, avant la contre-injection du film plastique (11), ladite au moins une encoche (13) est introduite dans la couche d'impression (19) pour le passage de la lumière.

10. Procédé selon l'une quelconque des revendications 8 ou 9, **caractérisé en ce que** le film plastique (11) est imprimé ou a été imprimé avant la contre-injection sur une face prévue comme face arrière dans la pièce moulée, et/ou **en ce que** ladite au moins une encoche (13) pour le passage de la lumière est introduite dans la couche d'impression (19) au moyen d'un enlèvement de matière au laser.

11. Procédé selon l'une quelconque des revendications 8 à 10, **caractérisé en ce que** des symboles de couleur opaque sont imprimés sur le film plastique (11) au niveau de ladite au moins une encoche (13) pour le passage de la lumière.

12. Procédé selon l'une quelconque des revendications 8 à 11, **caractérisé en ce qu'**une couche de protection et/ou d'aspect (16) transparente ou translucide est appliquée sur une face du film plastique (11) prévue comme face avant dans la pièce moulée (10).
